## Europäisches Patentamt
## European Patent Office
## Office européen des brevets

(19)

(11) Numéro de publication: **0 041 429**
**B1**

(12)
# FASCICULE DE BREVET EUROPEEN

(45) Date de publication du fascicule du brevet:
15.02.84

(51) Int. Cl.³: **H 04 J 3/06**, H 04 J 3/07

(21) Numéro de dépôt: 81400790.2

(22) Date de dépôt: 19.05.81

(54) Procédé et dispositif de synchronisation de signal numérique.

(30) Priorité: 19.05.80 FR 8011139

(43) Date de publication de la demande:
09.12.81 Bulletin 81/49

(45) Mention de la délivrance du brevet:
15.02.84 Bulletin 84/7

(84) Etats contractants désignés:
DE GB IT NL SE

(56) Documents cités:
FR - A - 2 178 418

IEE CONFERENCE ON SWITCHING TECHNIQUES FOR TELECOMMUNICATIONS NETWORKS, 21st-25th April 1969, Londres, GB, A. KUNDIG: "A switching unit for integrated PCM communication", pages 157-160
COMSAT TECHNICAL REVIEW, vol. 6, no. 1, printemps 1976, Washington, US, J.A. JANKOWSKI Jr.: "A new digital voice-activated switch", pages 159-178
N.T.C. 1979 CONFERENCE RECORD, vol. 1, 27-29 novembre 1979, New York, US, V.R. DHADESUGOOR et al.: "Delta modulation packet voice network with a variable packet size algorithm", pages 13.2.1-13.2.5

(73) Titulaire: L'Etat Français représenté par le Secrétaire d'Etat aux Postes et Télécommunications, (Centre National d'Etudes des Télécommunications) 38-40 rue du Général Leclerc, F-92131 Issy-les-Moulineaux (FR)
Titulaire: Etablissement Public de Diffusion dit "Télédiffusion de France", 21-27 rue Barbès, F-92120 Montrouge (FR)

(72) Inventeur: Mathieu, Michel, 12, rue Jacques Cartier, F-35830 Betton (FR)

(74) Mandataire: Fort, Jacques et al, CABINET PLASSERAUD 84, rue d'Amsterdam, F-75009 Paris (FR)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Procédé et dispositif de synchronisation de signal numérique

La présente invention concerne la synchronisation d'un signal numérique, constitué de mots successifs représentant des échantillons quantifiés d'information sonore et provenant d'une source asynchrone, avec une horloge de référence locale; elle trouve une application importante, bien que non exclusive, dans le domaine de la radiodiffusion sonore numérique.

Les techniques actuelles de transmission, de diffusion et d'enregistrement de sources sonores impliquent fréquemment de coder les signaux de ces sources en numérique. Le signal sonore analogique, fourni par la source, de bande passante déterminée est transformé en une succession de mots de x éléments binaires, appelés échantillons, représentatifs de la valeur quantifiée de ce signal analogique à des moments particuliers et périodiques, appelés temps d'échantillonnage. Les valeurs de la période d'échantillonnage et du nombre x d'éléments binaires par échantillon caractérisent la qualité du codage et dépendent de la nature des signaux à traiter. Les données numériques doivent, après transmission ou enregistrement, être reconverties par un convertisseur N/A qui exige une horloge de référence locale de génération de rythme. Pour générer ce rythme, on extrait du train de mots reçus le rythme d'arrivée des échantillons successifs. Leur fréquence nominale — c'est-à-dire intégrée sur une longue période de temps — est égale à la fréquence d'échantillonnage utilisée lors de la conversion A/N du signal sonore.

Malheureusement, les équipements parcourus par le signal entre les deux conversions (équipements de ligne dans le cas de la transmission ou de la diffusion et équipements numériques dans le cas de l'enregistrement) font apparaître des perturbations sur le spectre du rythme reconstitué. Par exemple, les équipements du multiplexage sur les réseaux numériques sont conçus pour accepter, dans certaines limites, de la gigue de phase, mais ils créent eux-mêmes une gigue qui possède des composantes spectrales à basse fréquence qui ne peuvent pas facilement être éliminées. Les enregistreurs présentent des défauts identiques s'ils ne disposent pas de dispositif d'asservissement de base de temps.

Par ailleurs, il est souvent délicat ou peu pratique d'asservir un centre de réception à un rythme extérieur, si ce centre possède sa propre horloge locale de référence.

On connaît déjà des procédés de multiplexage pour système de transmission par trames selon lesquels on insère des mots vides à cadence déterminée (FR -A- 2 178 418). Le résultat recherché est la possibilité de mélanger plusieurs trames entrantes pour constituer un seul signal sortant et il n'est pas prévu de traitement du signal. L'article «A switching unit for integrated PCM communication», Conference on Switching Techniques for Telecommunication Networks, 21-25 avril 1969, pp. 157-160, décrit de son côté une technique de justification qui implique de bourrer des mots nuls à l'avance dans le message. Là encore, le procédé décrit n'utilise pas les caractères propres des signaux sonores numériques et n'est pas appliqué à la synchronisation d'un récepteur qui effectue un traitement du signal.

L'article «A new digital voice-activated switch» in «Comsat Technical Review», vol 6, Nº 1, pp. 159-178, décrit un processus de détection des silences dans un signal représentant la voix et il est spécifique à ce type de signal. Mais il n'applique ce processus qu'au multiplexage temporel.

La présente invention vise à fournir un procédé et un dispositif permettant de synchroniser un signal numérique d'information sonore reçu avec une horloge locale asynchrone, c'est-à-dire d'adapter le rythme du signal numérique à celui de l'horloge et cela de façon simple.

L'invention utilise dans ce but le fait que les signaux numériques reçus comportent, lorsqu'ils ont été obtenus à partir d'une source sonore, des périodes de silence, qui peuvent sans inconvénient être prolongées ou raccourcies.

L'invention propose notamment un procédé de synchronisation de signal numérique, constitué de mots successifs représentant des échantillons quantifiés d'information sonore et comportant des périodes de silence, avec une horloge de référence locale lors de la reconversion ou restitution, suivant lequel on mémorise les mots dans une mémoire locale au fur et à mesure de leur arrivée et on les lit à la fréquence de l'horloge locale, caractérisé en ce qu'on détermine en permanence le taux de remplissage de la mémoire; on compare ce taux à un intervalle compris entre un seuil de remplissage maximal et un seuil minimal déterminés, et on modifie le contenu de la mémoire à l'apparition du premier silence qui suit la sortie du taux dudit intervalle, par vidage de la mémoire d'un nombre d'échantillons déterminé si le taux est supérieur au seuil maximal, par remplissage dans le cas contraire.

En d'autres termes, on mesure en permanence le contenu de la mémoire qui, au cours d'une phase initiale, avant début de la lecture, sera remplie à un taux déterminé, typiquement à moitié. Suivant l'écart entre les rythmes d'écriture et de lecture, la mémoire va se remplir ou se vider. A partir d'un certain seuil de remplissage maximal, on augmentera artificiellement et temporairement le débit de sortie; à partir d'un certain seuil de remplissage minimal, on réduira artificiellement et temporairement le débit de sortie.

Le procédé suivant l'invention impose de rechercher les périodes de silence dans le signal numérique. On les caractérisera conventionnellement par une suite continue de N échantillons, N étant supérieur à un nombre déterminé $N_0$, dont les valeurs sont comprises entre deux valeurs extrêmes S1 et S2. Les valeurs maximales S1 et minimale S2 peuvent être implicites, c'est-à-dire déterminées à l'avance, ou programmables. Un éventuel décalage continu du signal sonore lors de la conversion analogique/numérique est corrigeable par une programmation appropriée de S1 et S2.

Le paramètre $N_0$ caractérise la longueur du silence détecté: sa valeur peut être programmable.

On voit qu'on efface un silence au moins partiellement lorsqu'une augmentation de débit de sortie est recherchée: le contenu en mémoire décroît alors de N échantillons si le silence est effacé en totalité; on répète un silence — ou on l'allonge d'une durée déterminée — lorsqu'on recherche une réduction du débit de sortie.

La valeur $N_0$ peut être choisie en fonction de l'écart relatif maximal admissible entre les fréquences d'écriture et de lecture, d'une part, de la répartition statistique des silences dans les modulations reçues, d'autre part.

L'invention propose également un dispositif permettant de mettre en œuvre le procédé ci-dessus défini, comprenant une mémoire vive associée à des moyens d'écriture des mots au rythme de leur arrivée et à des moyens de lecture à la fréquence de l'horloge locale; dispositif caractérisé en ce qu'il comprend également des moyens de repérage du taux de remplissage de la mémoire et de comparaison avec un domaine limité par des seuils de remplissage minimal et maximal déterminés, fixes ou programmables, un détecteur de silence, et des moyens commandés par les moyens de comparaison et le détecteur pour remplir ou vider partiellement la mémoire, suivant le cas, au cours du premier silence qui suit la sortie du taux de remplissage hors du domaine.

Dans les définitions ci-dessus, les mots information sonore doivent être interprétés dans un sens large et comme désignant toute information ayant une répartition temporelle comparable à celle provenant d'une source sonore proprement dite, comportant donc des silences.

L'invention sera mieux comprise à la lecture de la description qui suit d'un exemple de réalisation, donné à titre d'exemple non limitatif. La description se réfère aux dessins qui l'accompagnent dans lesquels:

la fig. 1 est un synoptique de principe des circuits du dispositif, intégré à un récepteur, et

la fig. 2 montre une constitution possible des moyens de détection de silences de la fig. 1.

Le dispositif comporte une mémoire vive 1 qui reçoit le signal numérique provenant d'un codeur sur une entrée 11, par l'intermédiaire d'un coupleur non représenté. Une horloge d'écriture 12 associée à la mémoire 1 extrait, du train de mots numériques arrivant sur l'entrée 11, la fréquence d'échantillonnage qui constitue la fréquence d'écriture. Une horloge locale de lecture 13 est également associée à la mémoire 1. Sa fréquence nominale de lecture est engendrée par une horloge locale dont la valeur nominale est choisie proche de la valeur de la fréquence d'échantillonnage du codeur analogique/numérique qui fournit les signaux appliqués sur l'entrée 11 de la mémoire 1. L'écart entre les deux fréquences sera défini par la précision des horloges utilisées. Les techniques actuelles assurent aisément une précision de $10^{-6}$.

Le faible décalage existant entre les fréquences de conversion analogique/numérique et numérique/analogique ne crée aucune dégradation perceptible du signal sonore.

La mémoire 1 est structurée en mots ou multiplets de x éléments binaires, x étant le nombre d'éléments binaires ou bits par échantillon, et elle travaille en premier entré - premier sorti (mode dit FIFO). Les mots numériques successifs apparaissent ainsi en séquence sur la sortie 14, reliée à un convertisseur N/A.

Des moyens sont prévus pour mesurer en permanence le taux de remplissage de la mémoire. Ils comportent un compteur adresse d'écriture 2 et un compteur adresse de lecture 3, qui définissent respectivement les adresses d'écriture et de lecture dans la mémoire 1. Un système d'initialisation du processus, non représenté, provoque le remplissage de la mémoire, par écriture jusqu'à la moitié de sa capacité avant lecture, et charge les compteurs 2 et 3 de façon que la valeur absolue de leur différence (modulo la capacité de la mémoire) soit égale à la moitié de la capacité globale de la mémoire. En d'autres termes, les pointeurs d'écriture et de lecture sont alors à distance maximale l'un de l'autre. Le compteur 2 est relié à la sortie de l'horloge 12 de façon qu'à chaque écriture en mémoire 1 ce compteur adresse d'écriture 2 soit incrémenté d'une unité (modulo la capacité de la mémoire). Le compteur adresse de lecture 3 a son entrée d'incrémentation reliée à la sortie de l'horloge 13 de façon qu'à chaque lecture de la mémoire 1 ce compteur 3 soit incrémenté d'une unité (modulo la capacité de la mémoire).

Le taux de remplissage peut ainsi être déterminé en comparant le contenu des compteurs 2 et 3. Pour cela, les moyens de mesure comprennent encore un compteur-décompteur 4, que l'on appellera par la suite compteur du seuil de décalage, que le système d'initialisation met à zéro au début du processus. L'entrée d'incrémentation 16 du compteur de seuil 4 est reliée à la sortie de l'horloge d'écriture 12, par l'intermédiaire d'une porte OU 17, dont le rôle apparaîtra plus loin, de sorte que le compteur 4 s'incrémente d'une unité à chaque écriture. Son entrée de décrémentation 18 est reliée de façon similaire à l'horloge 13 par l'intermédiaire d'une porte OU 19, de façon que le compteur se décrémente à chaque lecture. Ainsi, un rythme de lecture plus rapide qu'un rythme d'écriture conduira à une valeur négative de ce compteur et inversement.

La valeur absolue du contenu du compteur apparaît sur une sortie à plusieurs bits 20 et le signe apparaît sous forme de signal binaire sur une seconde sortie 21.

Le compteur 4, qui représente le taux de remplissage de la mémoire 1, est associé à un comparateur 22 qui reçoit, d'une part, les sorties du compteur 4, d'autre part, un signal de seuil provenant d'un générateur 23 qui fournit un signal à plusieurs bits représentatif de l'écart maximal accepté entre le contenu de la mémoire 1 et la demi-capacité. Le générateur 23 peut être à seuil fixe ou programmable: le choix sera fait suivant la nature du système de transmission, de diffusion ou d'enregistrement utilisé.

Le comparateur 22 est prévu pour ne fournir aucun signal lorsque le contenu du compteur de seuil de décalage 4 est inférieur en valeur absolue au seuil affiché par le générateur 23 et pour fournir un signal logique sur l'une des sorties 24 et 25, suivant le signe indiqué sur la sortie 20, lorsque la valeur absolue du contenu du compteur 4 dépasse le seuil affiché.

Les sorties 24 et 25 sont reliées à des moyens de resynchronisation pour les activer lorsqu'elles fournissent un signal. Ces moyens interviennent alors dès le premier silence, ce qui implique de prévoir des moyens de détection de celui-ci et des moyens de raccourcissement et d'allongement du silence.

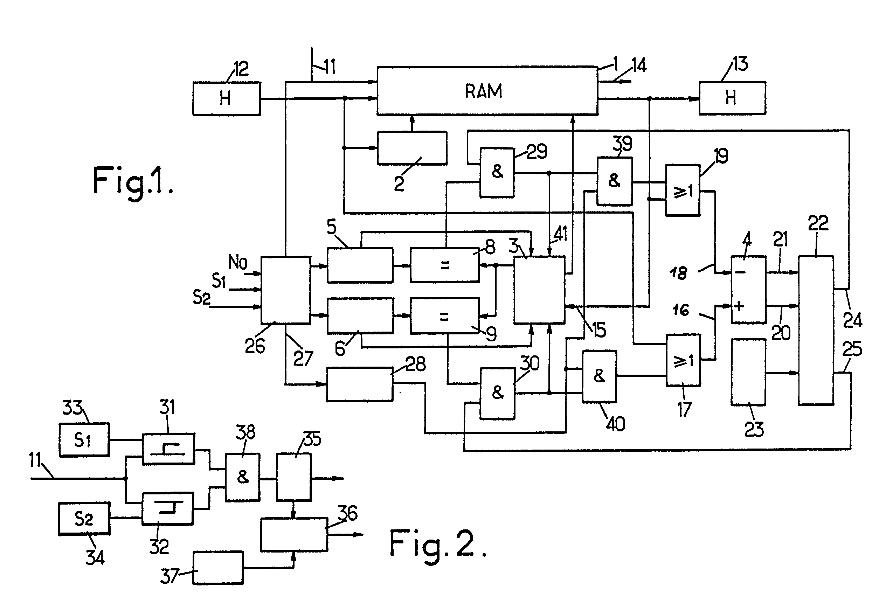

Un silence sera caractérisé conventionnellement par une suite continue d'au moins $N_0$ échantillons successifs dont les valeurs sont comprises entre deux valeurs extrêmes déterminées S1 et S2. Ces valeurs sont généralement l'une positive et l'autre négative, symétriques ou différentes à cause des décalages. Les moyens de détection d'un silence ainsi défini peuvent avoir la constitution montrée en fig. 2. Ces moyens comprennent deux comparateurs 31 et 32 qui reçoivent les échantillons successifs et comparent leur valeur aux seuils S1 et S2. Les seuils S1 et S2 peuvent être programmés localement ou par un signal de données spécial accompagnant le signal sonore numérique.

La solution la plus simple consiste évidemment à utiliser des valeurs S1, S2 et $N_0$ fixées une fois pour toutes: cette solution est satisfaisante lorsque le signal sonore transmis a un type de modulation unique (par exemple parole). Il est également possible de prévoir une programmation manuelle qui peut se limiter à un simple commutateur à plusieurs positions (par exemple parole, musique classique et musique contemporaine). La notion de silence étant liée au type de modulation, une telle adaptation permet d'arriver dans la recherche des silences à un compromis satisfaisant entre une faible cadence d'opérations d'adaptation de rythme et la nécessité d'éviter le remplissage de la mémoire.

Une solution intéressante lorsque l'on souhaite adapter automatiquement les critères de la recherche des silences consiste à effectuer celle-ci au niveau du codeur et à transmettre $N_0$, S1 et S2 (ou l'emplacement et la durée des silences) par un canal de données distinct. On peut ainsi détecter les silences (ce qui est l'opération la plus délicate) en un seul point et diffuser soit l'information de présence d'un silence, soit les critères de définition, aux multiples dispositifs de synchronisation ou d'adaptation de rythme placés en aval.

Dans ce cas, l'adaptation de S1 et S2 peut se faire par exemple en partant de la condition que l'intervalle entre silences détectés ne doit pas dépasser une durée déterminée: S1 et S2 sont tout d'abord fixés pour définir un intervalle étroit, puis automatiquement écartés si aucun silence n'a été détecté au bout d'une fraction déterminée de la durée. Les valeurs de seuils S1 et S2 sont respectivement stockées dans des mémoires 33 et 34. Une porte ET 38 reliée aux comparateurs fournit à un compteur 35 un signal qui provoque l'incrémentation du compteur par l'horloge 12 s'il indique une valeur d'échantillons comprise entre S1 et S2, la remise à zéro synchrone dans le cas contraire. Un comparateur 36 compare le contenu du compteur 35 à la valeur $N_0$ stockée dans une mémoire 37. Comme les seuils, $N_0$ peut être programmé localement ou par un signal de données spécial accompagnant le signal sonore numérique. $N_0$ sera typiquement inférieur au signal de seuil fourni par le générateur 23.

La présence d'un signal sur la sortie du comparateur 36 caractérise la présence d'un silence dans le signal reçu. Dans ce cas particulier, les moyens de détection du silence fournissent une information sur l'apparition de l'échantillon d'ordre $N_0$ d'un silence. On peut évidemment en déduire le début du silence, $N_0$ échantillons plus tôt.

Ces informations sont suffisantes pour exécuter la procédure d'adaptation du rythme de lecture.

Les moyens montrés en fig. 2 peuvent être remplacés par tout autre système permettant de repérer le début du silence et soit le nombre conventionnel $N_0$ (cas de la fig. 2), soit la durée totale effective N. Ces systèmes peuvent être placés en amont de la voie de transmission sonore numérique, les informations de silence étant alors transmises sur un canal parallèle à la voie de transmission des signaux sonores numériques.

Sur la fig. 1, les moyens de détection de silence ont été représentés globalement par un système 26 auquel sont appliquées les valeurs prédéterminées $N_0$, S1 et S2. Ce système 26 comporte une sortie 27 de commande d'un générateur 28 qui fournit, chaque fois qu'il est excité, une séquence de $N_0$ impulsions en un temps inférieur à une période de l'horloge 13 et dont le rôle apparaîtra plus loin. Le système 26 est prévu pour fournir également des signaux sur des sorties reliées à des mémoires tampons 5 et 6 dès qu'ils détectent un silence. Ces signaux de commande provoquent le stockage de l'adresse de début de silence dans la mémoire 5, de l'adresse de fin de silence (échantillon d'ordre $N_0$) dans la mémoire 6. Les signaux d'adresse contenus dans les mémoires 5 et 6 sont respectivement appliqués à deux comparateurs 8 et 9 qui reçoivent également l'indication de l'adresse contenue dans le compteur d'adresse d'écriture 3. Les comparateurs 8 et 9 sont reliés aux entrées de portes ET respectives 29 et 30 également attaquées par les sorties 24 et 25, respectivement. Les portes ET 29 et 30 attaquent par l'intermédiaire d'une porte ET 39 et ET 40 des portes OU 17 et 19, respectivement. Cela étant, le fonctionnement du dispositif montré en fig. 1 est le suivant.

Dès l'instant où le seuil de décalage fixé par le générateur 23 est atteint, le comparateur 22 fournit un signal sur la sortie 24 ou la sortie 25, suivant que le contenu du compteur 4 est positif ou négatif. Ce signal débloque la porte ET 29 ou 30, suivant le cas, de sorte que le décalage sera réduit lors de la première période de silence qui apparaîtra.

Dès qu'un silence est détecté, les adresses en mémoire 3 de début et de fin de ce silence sont respectivement transférées ou stockées dans les mémoires 5 et 6.

Si le contenu du compteur 4 est positif, le comparateur 8 envoie à l'entrée 41 de la mémoire 3, par l'intermédiaire de la porte ET 29, un ordre de chargement du compteur 3 à la valeur contenue dans la mémoire 6 (fin de silence) dès que le compteur d'adresse lecture 3 affiche le contenu de la mémoire 5. En même temps, la sortie de la porte ET 29 débloque la porte ET 39 et provoque la décrémentation du compteur 4 de $N_0$ unités par le générateur d'impulsions 28.

De façon similaire, si le contenu du compteur 4 est négatif, le comparateur 9 intervient dès que le compteur d'adresse lecture 3 affiche le même contenu que la mémoire 6: le comparateur 9 provoque alors le chargement du compteur 3 à la valeur contenue dans la mémoire 5. Il valide simultanément la porte ET 40 à travers la porte 30. Le compteur 4 est alors incrémenté de $N_0$ unités par le générateur d'impulsions 28.

On voit que le silence aura été réduit dans le premier cas, allongé dans le second. Si le décalage a une valeur telle que le contenu du compteur 4 est encore au-dessus du seuil, en valeur absolue, après cette opération de rattrapage, la même procédure est réinitialisée.

A titre de simple exemple, on peut indiquer que le dispositif a été mis en œuvre dans un récepteur dont l'horloge locale avait une stabilité relative de $10^{-5}$. La mémoire avait une capacité de 1 k échantillons de 16 bit et pouvait donc être réalisée en un seul boîtier. Le dispositif n'intervenait pour adapter le rythme que tous les quarts d'heure environ, avec une durée de silence de l'ordre de 13 ms correspondant à $N_0 = 384$ échantillons.

L'invention ne se limite pas aux modes particuliers de réalisation qui ont été représentés et décrits à titre d'exemples. Elle s'étend au contraire à toute variante restant dans le cadre des équivalences et à toute application, par exemple un système de transmission utilisant une procédure par paquets, où les données arrivent par salves.

## Revendications

1. Procédé de synchronisation d'un signal numérique constitué de mots successifs représentant des échantillons quantifiés d'information sonore et comportant des périodes de silence, avec une horloge de référence locale lors de la reconversion, suivant lequel on mémorise les mots dans une mémoire locale (1) au fur et à mesure de leur arrivée et on les lit à la fréquence de générateur local (13), caractérisé en ce qu'on détermine en permanence le taux de remplissage de la mémoire, on compare ce taux à un intervalle compris entre un seuil de remplissage maximal et un seuil minimal déterminés, et on modifie le contenu de la mémoire à l'apparition du premier silence qui suit la sortie du taux dudit intervalle, par vidage de la mémoire d'un nombre d'échantillons déterminé, si le taux est supérieur au seuil maximal, par remplissage dans le cas contraire, le critère de silence étant la présence d'échantillons successifs compris entre une valeur maximale (S1) et une valeur minimale (S2) déterminées pendant au moins une durée déterminée.

2. Procédé suivant la revendication 1, caractérisé en ce que la mémoire est vidée ou remplie d'un nombre d'échantillons correspondant à une durée prédéterminée.

3. Procédé suivant la revendication 2, caractérisé en ce que ladite durée et lesdites valeurs sont programmées localement au niveau de la reconversion.

4. Procédé suivant la revendication 2, caractérisé en ce que ladite durée et lesdites valeurs sont transmises par un canal de données parallèle à la voie d'amenée du signal numérique à partir du dispositif de codage des signaux sonores.

5. Dispositif de synchronisation d'un signal numérique constitué de mots successifs représentant des échantillons quantifiés d'information sonore et comportant des périodes de silence, avec une horloge locale asynchrone avec la source du signal et associée à un dispositif de réception comportant une mémoire vive (1) associée à des moyens d'écriture des mots au rythme de leur arrivée et à des moyens de lecture à la fréquence de l'horloge locale (13), caractérisé en ce qu'il comprend également des moyens (2, 3, 4) de repérage du taux de remplissage de la mémoire et de comparaison avec un domaine limité par des seuils de remplissage minimal et maximal déterminés, fixes ou programmables; un détecteur de silence; et des moyens commandés par les moyens de comparaison et le détecteur pour remplir ou vider partiellement la mémoire, suivant le cas, au cours du premier silence qui suit la sortie du taux de remplissage hors du domaine.

6. Dispositif suivant la revendication 5, caractérisé en ce que le détecteur de silence comporte des moyens pour déceler la présence en mémoire d'un nombre au moins égal à un nombre déterminé $N_0$ de mots successifs, compris entre une valeur maximale (S1) et une valeur minimale (S2) déterminées.

7. Dispositif suivant la revendication 6, caractérisé en ce qu'il est relié au dispositif de codage des signaux sonores par un canal de données parallèle à une voie d'amenée dudit signal numérique et qui transmet ladite durée et lesdites valeurs élaborées par le dispositif de codage.

8. Dispositif suivant l'une des revendications 5, 6 ou 7, caractérisé en ce que les moyens de repérage du taux de remplissage de la mémoire comprennent un compteur-décompteur (4) ayant une entrée d'incrémentation reliée à une horloge (12) d'écriture dans la mémoire vive (1) et une entrée de décrémentation reliée à l'horloge locale asynchrone de lecture (13) et en ce que les moyens de comparaison avec un domaine limité comportent un comparateur (22) qui reçoit des signaux de sortie représentatifs de la valeur absolue et du signe du contenu du compteur-décompteur (4) et fournit un signal de réduction ou de répétition de silence lorsque ladite valeur absolue dépasse un seuil déterminé.

9. Dispositif suivant la revendication 8, caractérisé en ce que les moyens pour remplir ou vider partiellement la mémoire comprennent:

— un générateur déclenché d'un nombre prédéterminé $N_0$ d'impulsions,

— une première mémoire auxiliaire (5) destinée à stocker l'adresse en mémoire vive du début de silence et une seconde mémoire auxiliaire (6) destinée à stocker l'adresse en fin de silence, $N_0$ mots après le début,

— un comparateur provoquant le transfert de l'adresse de fin de silence dans le compteur (3) d'adresse de lecture en mémoire vive lors de la coïncidence entre l'adresse de lecture réelle et l'adresse en mémoire auxiliaire (5), lorsque la mémoire doit être partiellement vidée,

— un comparateur destiné à provoquer le transfert de la mémoire de début de silence dans le compteur (3) d'adresse de lecture de la mémoire vive lors de la coïncidence entre l'adresse dans le compteur (3) et l'adresse en mémoire (6), lorsque la mémoire doit être remplie.

## Claims

1. Process for synchronizing a digital signal consisting of successive words representing quantized sound information samples and comprising silent periods, with a local reference clock during the reconversion, according to which the words are stored in a local store (1) in succession as they arrive and said words are read at the frequency of the local generator (13), characterized in that the degree of filling of the store is continuously monitored, that said degree is compared with a range between predetermined maximal and minimal thresholds, and in that the contents of the store are modified on appearance of the first silence after said degree of filling has passed out of said range, by emptying said store of a predetermined number of samples if the degree is higher than the maximal threshold and by filling the store in the opposite condition, the criterion of silence being the presence of successive samples having a level between a predetermined maximal value (S1) and a predetermined minimal value (S2) for at least a predetermined duration.

2. Process according to claim 1, characterized in that the store is emptied or filled by a number of samples corresponding to a predetermined time duration.

3. Process according to claim 2, characterized in that said duration and said values are locally programmed at the reconversion level.

4. Process according to claim 2, characterized in that said duration and said values are transmitted by a data channel parallel to a chanel transferring the digital signal from a device for encoding the sound signals.

5. Apparatus for synchronizing a digital signal formed from successive words representing quantized sound information samples and comprising silent periods, with a local clock asynchronous with the source of the signal and associated with a receiving device, comprising: a read-and-write store (1) associated with means for writting words into the store as they arrive and with means for reading out at the frequency of the local clock (13), characterized in that it further comprises means (2, 3, 4) for detecting the degree of filling of the store and for comparing it with a range limited by predetermined minimal and maximal thresholds, which are fixed or programmable; a silent period detector; and means controlled by said comparison means and the detector for partially filling or emptying the store, as the case may be, during the first silent period after the degree of filling has passed outside the range.

6. Apparatus according to claim 5, characterized in that the silent period detector comprises means for detecting the presence in the store of a number at least equal to a predetermined number $N_0$ of successive words between a predetermined maximal value (S1) and a predetermined minimal value (S2).

7. Apparatus according to claim 6, characterized in that it is connected to the sound signal encoding device by a data channel parallel to a chanel bringing said digital signal and which transmits said duration and said values which are elaborated by the encoding device.

8. Apparatus according to claim 5, 6 or 7, characterized in that the means for detecting the degree of filling of the store comprise an up-down counter (4) having an up-counting input connected to a clock (12) for writing into the read-and-write memory and a down-counting input connected to the local asynchronous read-out clock (13), and in that the means for comparison with a limited range comprise a comparator (22) which receives output signals representative of the absolute value and of the sign of the contents of the up-down counter (4) and supplies a signal for reduction or repetition of the silent period when said absolute value exceeds a given threshold.

9. Apparatus according to claim 8, characterized in that the means for partially filling or emptying the store comprise:

— a triggerable generator for delivering a predetermined number $N_0$ of pulses,

— a first auxiliary store (5) for storing the address in the read-and-write memory of the silent period beginning and a second auxiliary store (6) for storing the silent period end address, $N_0$ words after the beginning,

— a comparator, causing the silent period end address to be transferred into the read-and-write memory read-out address counter (3), if there is coincidence between the actual read-out address and the address in the auxiliary store (5), when the store must be partially emptied,

— a comparator for causing transfer, from the silent interval beginning memory into the read-address counter (3) of the read-and-write memory, when there is coincidence between the address in said counter (3) and the address stored in store (6), when the store must be filled.

**Patentansprüche**

1. Verfahren zur Synchronisierung eines digitalen Signals, das aufeinanderfolgende Worte, die quantisierte Toninformationsmuster repräsentieren, und stille Perioden enthält, mit einer lokalen Bezugsuhr bei der Rückumwandlung, nach dem man die Worte in einem lokalen Speicher (1) in der Reihenfolge ihres Eintreffens festhält, und die Worte bei der Frequenz des lokalen Generators (13) liest, dadurch gekennzeichnet, dass man:
— den Füllgrad des Speichers kontinuierlich überwacht,
— den Füllgrad mit einem Bereich zwischen vorbestimmtem, maximalen und minimalen Füllgrad vergleicht, und
— den Inhalt des Speichers beim Erscheinen der ersten stillen Periode modifiziert, nachdem dieser den festgesetzten Bereich verlassen hat, indem man den Speicher um eine fesgesetzte Zahl von Mustern leert, wenn er höher als sein Maximum ist, und im entgegengesetzten Fall füllt, wobei das Kriterium der Stille die Gegenwart von aufeinanderfolgenden Mustern ist, die wenigstens während einer vorbestimmten Dauer zwischen einem Maximalwert (S1) und einem Minimalwert (S2) liegen.

2. Verfahren nach Anspruch 1, dadurch gekennzeichnet, dass der Speicher mit einer Zahl von Mustern geleert oder gefüllt wird, die einer vorbestimmten Dauer entsprechen.

3. Verfahren nach Anspruch 2, dadurch gekennzeichnet, dass die genannte Dauer und die genannten Werte lokal an der Stelle der Rückumwandlung programmiert werden.

4. Verfahren nach Anspruch 2, dadurch gekennzeichnet, dass die genannte Dauer und die genannten Werte mittels eines Datenkanals übertragen werden, der parallel zu einem Übertragungskanal für das digitale Signal ist, der von einer Kodiervorrichtung für die Tonsignale ausgeht.

5. Synchronisiervorrichtung für ein aus aufeinanderfolgenden Wörtern gebildetes digitales Signal, das quantisierte Toninformationsmuster repräsentiert, mit einer lokalen Uhr, die mit der Quelle des Signals asynchron ist, und verbunden mit einer Empfangsvorrichtung mit einem RAM-Speicher (*mémoire vive*) (1), der mit Vorrichtungen zum Schreiben der Wörter im Rythmus ihres Eintreffens verbunden ist, und mit Vorrichtungen zum Lesen bei der Frequenz der lokalen Uhr (13), dadurch gekennzeichnet, dass sie weiters enthält: Vorrichtungen (2, 3, 4) zur Bestimmung des Füllgrades des Speichers und für den Vergleich dieses Füllgrades mit einem Bereich begrenzt durch vorbestimmte, minimale und maximale, fixierte oder programmierbare Füllschwellen; einen Stilleperiode-Detektor; und von den Vergleichsvorrichtungen und dem Detektor gesteuerte Vorrichtung zum teilweisen Füllen bzw. Leeren des Speichers während der ersten Stilleperiode, die dem Austreten des Füllgrades aus dem festgesetzten Bereich folgt.

6. Vorrichtung nach Anspruch 5, dadurch gekennzeichnet, dass der Stilleperiode-Detektor Mittel zur Bestimmung des Vorhandenseins einer Zahl im Speicher enthält, die mindestens gleich ist der vorbestimmten Zahl $N_0$ der aufeinanderfolgenden Wörter, die zwischen einem vorbestimmten Maximalwert (S1) und einem vorbestimmten Minimalwert (S2) liegt.

7. Vorrichtung nach Anspruch 5, dadurch gekennzeichnet, dass sie mit einer Vorrichtung zur Kodierung von Tonsignalen über einen Kanal verbunden ist, der parallel zu einem Übertragungskanal für das digitale Signal ist, und der die Dauer und die von der Kodiervorrichtung ausgearbeiteten Werte überträgt.

8. Vorrichtung nach einem der Ansprüche 5, 6 oder 7, dadurch gekennzeichnet, dass die Vorrichtung zur Ermittlung des Füllgrades des Speichers einen Vorwärts- und Rückwärtszähler (4) umfasst mit einem Zugang für die Vorwärtszählung, der mit einer Schreibuhr (12) im RAM-Speicher (1) verbunden ist, und mit einem Zugang für die Rückwärtszählung, der mit der lokalen asynchronen Leseuhr (13) verbunden ist, und dadurch, dass die Vorrichtungen zum Vergleich mit einem begrenzten Bereich eine Vergleichsvorrichtung (22) haben, die Austrittssignale erhält, die dem absoluten Wert und dem Zeichen des Inhalts des Zählers entsprechen (4) und ein Signal zur Reduzierung oder Wiederholung der Stille liefert, wenn der genannte absolute Wert einen vorbestimmten Wert überschreitet.

9. Vorrichtung nach Anspruch 8, dadurch gekennzeichnet, dass die Vorrichtungen zum teilweisen Füllen oder Leeren des Speichers umfassen:
— einen ausgelösten Generator zur Ausgabe einer vorbestimmten Zahl $N_0$ von Impulsen,
— einen ersten Hilfsspeicher (5) zur Speicherung der Adresse des Beginns der Stille im RAM-Speicher und einen zweiten Hilfsspeicher (6) zur Speicherung der Adresse des Endes der Stille, $N_0$-Worte nach dem Beginn,
— einen Vergleicher, der die Übertragung der Adresse des Endes der Stille in den Zähler (3) der Leseadresse im RAM-Speicher bei der Koinzidenz zwischen der wirklichen Leseadresse und der Adresse im Hilfsspeicher (5) verursacht, wenn der Speicher teilweise geleert werden muss,
— einen Vergleicher, der die Übertragung des Beginns der Stille in den Zähler (3) der Leseadresse im RAM-Speicher bei Koinzidenz zwischen der Adresse in dem Zähler (3) und der Adresse im Speicher (6) verursacht, wenn der Speicher gefüllt werden muss.

Fig.1.

Fig.2.